# EUROPEAN PATENT APPLICATION

(11) **EP 3 819 191 A1**
(43) Date of publication of application: **12.05.2021**
(21) Application number: 19830415.6
(22) Date of filing: 01.07.2019
(51) Int. Cl.: B62D 5/04, F16H 1/20

(54) **STEERING WHEEL COUNTERFORCE APPLICATION DEVICE**

(30) Priority: 02.07.2018 JP 2018126295; 05.02.2019 JP 2019018476
(71) Applicant: NSK LTD., Shinagawa-Ku Tokyo 141-8560 (JP)
(72) Inventor: HIKIDA, Masafumi, Fujisawa-shi, Kanagawa 251-8501 (JP); MATSUDA, Yasuyuki, Fujisawa-shi, Kanagawa 251-8501 (JP); MORITA, Ryuho, Fujisawa-shi, Kanagawa 251-8501 (JP)
(74) Representative: Grünecker Patent- und Rechtsanwälte PartG mbB
(86) International application number: PCT/JP2019/026171
(87) International publication number: WO 2020/009074

(57) **Abstract**

Provided is a reaction force applying device for a steering wheel that can be configured in a small size. The two-stage gears 3a, 3b have an intermediate shaft 9 arranged so as to be parallel to the steering shaft 1, a first teeth section 10 provided on the intermediate shaft 9 and engaging with the shaft side teeth section 4 of the steering shaft 1, and a second teeth section 11 arranged on a portion on the electric motor 2 side of the intermediate shaft 9 with respect to the first teeth section 10 and engaging with the motor side teeth section 8 of the electric motor

## Description

### TECHNICAL FIELD

The present invention relates to a reaction force applying device for the steering wheel incorporated into a steer-by-wire steering system.

### BACKGROUND ART

The steer-by-wire steering system comprises a steering apparatus having a steering wheel and a turning device for applying a steering angle to a pair of wheels that are electrically connected to the steering apparatus. The steering apparatus further comprises a sensor for detecting an operational quantity of the steering wheel, and applies a steering angle to the pair of wheels by driving an actuator of the turning device based on an output signal of the sensor.

The steer-by-wire steering system has an advantage that the steering angle of the wheels with respect to the operational quantity of the steering wheel can be adjusted according to the traveling speed of the vehicle and the like. In particular, in a structure in which the steering apparatus and the turning device are not mechanically connected, the degree of freedom in designing the steering system can be improved, and parts can be shared between the right-hand steering wheel vehicle and the left-hand steering wheel vehicle.

The steer-by-wire steering system is configured to apply an operation reaction force to the steering wheel by an electric motor.

The steering system described in JP 2007-055453 (A) is configured to directly apply the power of the electric motor to the steering shaft without using such as a deceleration mechanism. In such a direct drive structure, however, there is a problem that the electric motor becomes larger.

On the other hand, in the steering system described in JP 2009-073334 (A), output shafts of a pair of electric motors are arranged so as to be parallel to the steering shaft, and the power of each of the electric motors is applied to the steering shaft via two-stage gears. Specifically, the large diameter side teeth section of each of the two-stage gears is engaged with the motor side teeth section arranged on the output shaft of the electric motor, and the small diameter side teeth section of each of the two-stage gears is engaged with the shaft side teeth section arranged on the steering shaft.

### [Related Literature]

### [Patent Literature]

[Patent Literature 1] JP 2007-055453 (A)
[Patent Literature 2] JP 2009-073334 (A)

### SUMMARY OF INVENTION

### [Problem to be Solved by Invention]

In the steering system described in JP 2009-073334 (A), since the output shafts of the pair of electric motors are arranged so as to be parallel to the steering shaft, electric motors with a large volume are arranged around the steering shaft and that causes a problem in which the reaction force applying device that applies an operation reaction force to the steering wheel becomes large as a whole.

Taking the situation described above into consideration, the objective of the present invention is to achieve a structure of a reaction force applying device for a steering wheel which can be configured compactly.

### [Means for Solving Problems]

The reaction force applying device of the present invention comprises a steering shaft, an electric motor, and at least one two-stage gear.

The steering shaft has a shaft side teeth section.

The electric motor has an output shaft arranged coaxially with the steering shaft, and a motor side teeth section arranged at the tip end section of the output shaft.

The at least one two-stage gear has an intermediate shaft arranged so as to be parallel to the steering shaft, a first teeth section arranged on the intermediate shaft and engaging with the shaft side teeth section, and a second teeth section arranged on a portion on the electric motor side of the intermediate shaft with respect to the first teeth section and engaging with the motor side teeth section.

The at least one two-stage gear is preferably configured by a plurality of two-stage gears, and more preferably configured by three two-stage gears. However, the at least one two-stage gear may be configured by two or more than four two-stage gears, or may be configured by one two-stage gear.

The reaction force applying device of the present invention can further comprise a pressing mechanism that biases the at least one two-stage gear toward inside in the radial direction of the steering shaft. Note that, when the at least one two-stage gear is configured by the plurality of two-stage gears, at least one two-stage gear of the plurality of two-stage gears can comprise the pressing mechanism.

With the intermediate shaft as a torsion bar, the intermediate shaft can exhibit elasticity in the twisting direction in a state where torque is not transmitted by the at least one two-stage gear. In this case, the at least one two-stage gear can further comprise a stopper mechanism that prevents the first teeth section and the second teeth section from rotating relative to each other by a predetermined angle or more. Note that, when the at least one two-stage gear is configured by the plurality of two-stage gears, with the intermediate shaft of at least one two-stage gear of the plurality of two-stage as a torsion bar, and in a state that torque is not transmitted by the at least one two-stage gear, the intermediate shaft can exhibit elasticity in the twisting direction.

It is preferable that an axis alignment portion for aligning the steering shaft and the output shaft is further provided.

The axis alignment portion can comprise a concave section provided on one of the steering shaft and the output shaft, a convex section provided on the other of the steering shaft and the output shaft and arranged on the inner diameter side of the concave section, and a sleeve arranged between the inner peripheral surface of the concave section and the outer peripheral surface of the convex section without looseness in the radial direction.

Alternatively, the axis alignment portion can comprise a concave section provided on one of the steering shaft and the output shaft, a convex section provided on the other of the steering shaft and the output shaft and arranged on the inner diameter side of the concave section, and a plurality of rolling elements arranged between the inner peripheral surface of the concave section and the outer peripheral surface of the convex section so as to roll freely.

Alternatively, the axis alignment portion can comprise a concave section provided on one of the steering shaft and the output shaft, and a convex section provided on the other of the steering shaft and the output shaft and fitted inside the concave section without looseness in the radial direction so as to be able to rotate relative to the concave section.

### [Effect of Invention]

With the reaction force applying device of the present invention, it is possible to make the device more compact as a whole since the output shaft of the electric motor is arranged coaxially with the steering shaft.

### BRIEF DESCRIPTION OF DRAWINGS

FIG. 1 is a perspective view of a reaction force applying device for a steering wheel in accordance with a first example of an embodiment of the present invention.
FIG. 2 is a perspective view of a deceleration mechanism of the reaction force applying device for the steering wheel of the first example.
FIG. 3 is an end view seen from the left side in FIG. 2.
FIG. 4 is an enlarged cross-sectional view of the major parts of the reaction force applying device for the steering wheel of the first example.
FIG. 5 is a perspective view of a two-stage gear of the reaction force applying device for the steering wheel of a second example of an embodiment of the present invention.
FIG. 6 is a cross-sectional view of the two-stage gear of the reaction force applying device for the steering wheel of the second example.
FIG. 7 is a cross-sectional view of section of section X-X in FIG. 6.
FIG. 8 is an enlarged cross-sectional view of the major parts of a reaction force applying device for the steering wheel in accordance with a third example of an embodiment of the present invention.
FIG. 9 is an exploded perspective view of a steering shaft, an output shaft of an electric motor, and a sleeve of a reaction force applying device for a steering wheel of the third example.
FIG. 10 is an enlarged cross-sectional view of the major parts of a reaction force applying device for a steering wheel of a fourth example of an embodiment of the present invention.
FIG. 11 is an enlarged cross-sectional view of the major parts of a reaction force applying device for a steering wheel of a fifth example of an embodiment of the present invention.
FIG. 12 is an enlarged cross-sectional view of the major parts of a reaction force applying device for a steering wheel of a sixth example of an embodiment of the present invention.

### MODES FOR CARRYING OUT INVENTION

### [First Example]

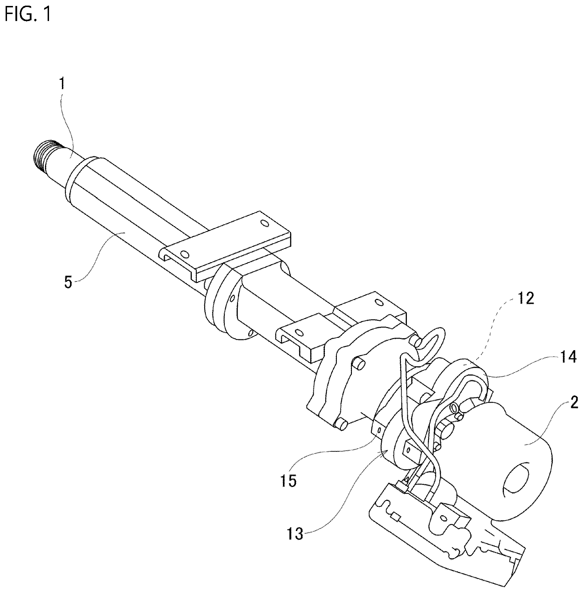

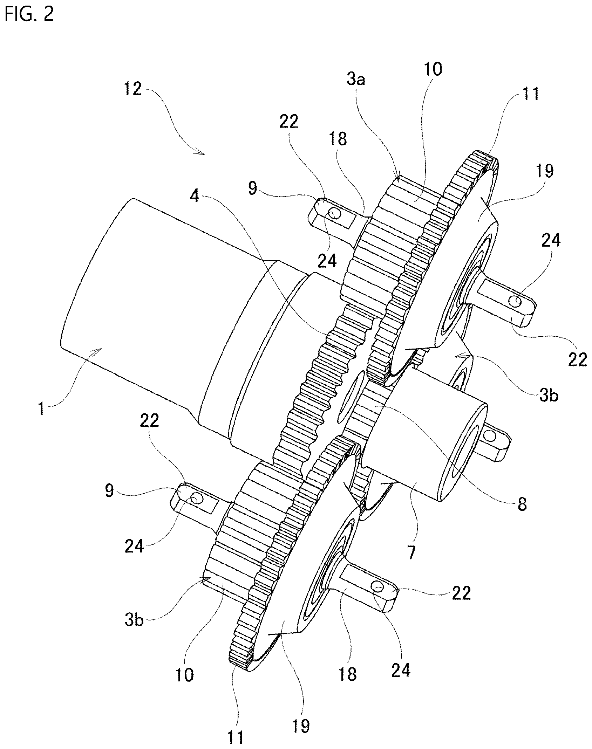

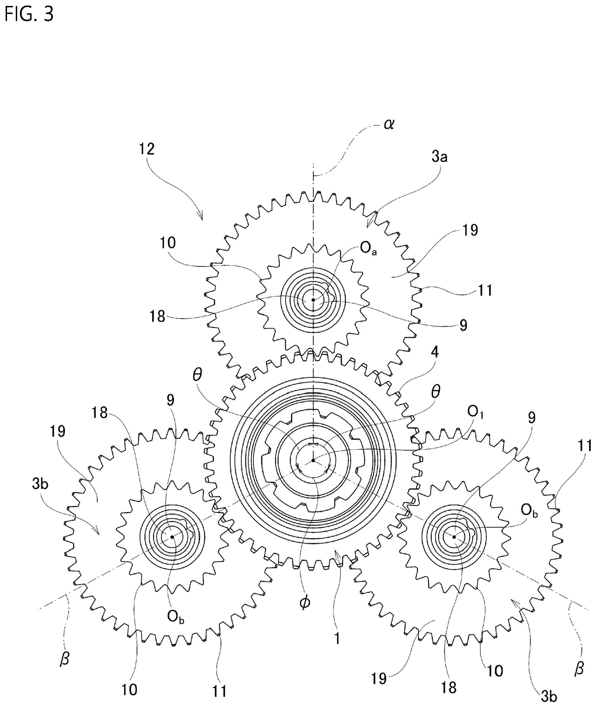

FIG. 1 to FIG. 4 illustrate a first example of an embodiment of the present invention. The reaction force applying device for the steering wheel of this example comprises a steering shaft 1, an electric motor 2, and three two-stage gears 3a, 3b.

The steering shaft 1 has a shaft side teeth section 4. In this example, the shaft side teeth section 4 is provided at the tip end section (front-end section; right end section in FIGs 1, 2, and 4) of the steering shaft 1. The shaft side teeth section 4 is arranged coaxially with the steering shaft 1, and rotates integrally with the steering shaft 1. The shaft side teeth section 4 has a predetermined pitch circle diameter and a predetermined number of teeth. Note that the steering shaft 1 is rotatably supported on the inner diameter side of the steering column 5 supported by a vehicle body via a rolling bearing 6. A steering wheel (not shown) is attached to the rear end section (left end section in FIG. 1) of the steering shaft 1 that protrudes toward the rear than the rear end section of the steering column 5.

The electric motor 2 has an output shaft 7 that is arranged coaxially with the steering shaft 1, and a motor side teeth section 8 that is arranged at the tip end section (rear end section) of the output shaft 7. The motor side teeth section 8 is arranged coaxially with the output shaft 7, and rotates integrally with the outpour shaft 7. Further, the motor side teeth section 8 has a pitch circle diameter that is smaller than the pitch circle diameter of the shaft side teeth section 4 and has a number of teeth that is smaller than the number of teeth of the shaft side teeth section 4.

Each of the two-stage gears 3a, 3b has an intermediate shaft 9, a first teeth section 10, and a second teeth section 11. The intermediate shaft 9 is arranged outside the steering shaft 1 in the radial direction of the steering shaft 1 so as to be parallel to the steering shaft 1. The first teeth section 10 is arranged around a section (rear side section) of the steering shaft 1 side with respect to the axial direction of the intermediate shaft 9 so as to be able to freely rotate about the intermediate shaft 9, and engage with the shaft side teeth section 4 of the steering shaft 1. The first teeth section 10 has a predetermined pitch circle diameter and a number of teeth. The second teeth section 11 is arranged around a section (front side section) of the electric motor 2 side with respect to the axial direction of the intermediate shaft 9 so as to rotate in synchronization with the first teeth section 10, and engage with the motor side teeth section 8. The second teeth section 11 has a pitch circle diameter that is larger than the pitch circle diameter of the first teeth section 10, and has a number of teeth that is larger than the number of teeth of the first teeth section 10.

In this example, the shaft side teeth section 4 of the steering shaft 1, the first teeth sections 10 and the second teeth sections 11 of the two-stage gears 3a, 3b, and the motor side teeth section 8 of the electric motor 2 configure the deceleration mechanism 12 for decelerating the motive power of the electric motor 2 and transmitting it to the steering shaft 1. Note that the reduction ratio between the steering shaft 1 and the output shaft 7 of the electric motor 2 is preferably 3 or more and 6 or less.

In this example, the deceleration mechanism 12 is enclosed within a housing 13. The housing 13 is configured by joining and fastening a front side housing element 14 that is arranged in the front and a rear side housing element 15 that is arranged in the rear by a bolt 16. The electric motor 2 is supported and fastened to the front side housing element 14, and the rear side housing element 15 is supported and fastened to the front-end section of the steering column 5.

The reaction force applying device for the steering wheel of this example further comprises a pressing mechanism 17 that elastically biases one two-stage gear 3a of the two-stage gears 3a, 3b inward in the radial direction of the steering shaft 1.

In this example, the three two-stage gears 3a, 3b are ununiformly arranged around the steering shaft 1 and the output shaft 7 of the electric motor 2 in the circumferential direction. Specifically, the angle θ between the virtual straight line α orthogonal to the center axis O₁ of the steering shaft 1 and the center axis Oₐ of the two-stage gear 3a that is biased by the pressing mechanism 17 and the virtual straight line β orthogonal to the center axis O₁ of the steering shaft 1 and the center axis O_{b} of the two-stage gears 3b that are not biased by the pressing mechanism 17 is smaller than the angle ϕ between the virtual straight lines β (θ<ϕ). However, it is also possible to uniformly arrange the three two-stage gears 3a, 3b around the steering shaft 1 and the output shaft 7 of the electric motor 2 in the circumferential direction. When a plurality of two-stage gears are arranged, the distance between the two-stage gears in the circumferential direction is determined according to the total number of the two-stage gears, the number of teeth of the first teeth section, and the number of teeth of the second teeth section.

In this example, each of the two-stage gears 3a, 3b comprises a shaft member 18 that configures the intermediate shaft 9, a cylindrical member 19 having a cylindrical shape, and a pair of rolling bearings 20a, 20b. The shaft member 18 has a large diameter section 21 in the middle section in the axial direction, and a pair of flat plate sections 22 that protrude in the axial direction from both end sections in the axial direction of the large diameter section 21 and respectively have a rectangular cross-sectional shape. The cylindrical member 19 comprises a flange portion 23 protruding outward in the radial direction at the middle section in the axial direction, and has the first teeth section 10 that is provided on the outer peripheral surface of the steering shaft 1 side from the flange portion 23 in the axial direction and the second teeth section 11 that is provided on the outer peripheral surface of the flange portion 23.

Each of the two-stage gears 3a, 3b has rolling bearings 20a, 20b between the both end sections in the axial direction of the outer peripheral surface of the large diameter section 21 of the shaft member 18 and the both end sections in the axial direction of the inner peripheral surface of the cylindrical member 19 respectively, so that the cylindrical member 19 is supported around the middle section in the axial direction of the shaft member 18 so as to rotate freely. In the illustrated example, deep-groove ball bearings are used as rolling bearings 20a, 20b, however, it is also possible to use cylindrical roller bearings, tapered roller bearings, sliding bearings and the like. Further, although the cylindrical member 19 is integrally configured as a whole, it is also possible to configure the cylindrical member 19 by connecting a first member 10 having the first teeth section 10 and a second member having the second teeth section 11 so as not to be able to rotate relative to each other.

Of the two-stage gears 3a, 3b, the two-stage gear 3a biased by the pressing mechanism 17, with the both end sections in the axial direction (flat plate sections 22) inside the housing 13, is supported so as to be able to displace in the radial direction of the steering shaft 1.

In this example, the two-stage gear 3a has through-holes 24 that pass through each of the flat plate sections 22 of the shaft member 18 in the radial direction.

The housing 13 has a pair of guide holes 25, a pair of screw holes 26, and a pair of circular holes 27. The pair of guide holes 25 is provided in portions of the rear side surfaces of the front side housing element 14 and the front side surfaces of the rear side housing element 15 which face to each other and are aligned with each other, that is, in portions where the positions coincide with each other in the radial direction and the circumferential direction of the steering shaft 1. The guide holes 25 have an elliptical cross-sectional shape having a long diameter in a direction corresponding to the radial direction of the steering shaft 1 and a short diameter orthogonal to the radial direction of the steering shaft 1 (the direction of the long diameter) and the axial direction of the shaft member 18. The pair of screw holes 26 is provided so as to communicate the outer peripheral surfaces of the front side housing element 14 and the rear side housing element 15 and the inner peripheral surfaces of the guide holes 25 in the radial direction of the steering shaft 1. The pair of circular holes 27 are formed so as to communicate the inner peripheral surfaces of the front side housing element 14 and the rear side housing element 15 and the inner peripheral surfaces of the guide holes 25 in the radial direction of the steering shaft 1.

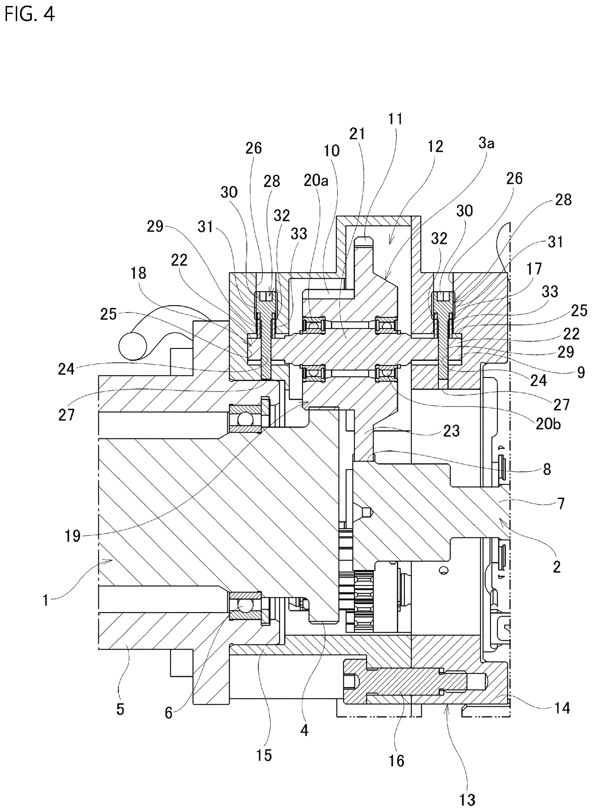

The pair of flat plate sections 22 of the two-stage gear 3a is supported inside the guide holes 25 by using the support members 28 so as to be displaced in the radial direction of the steering shaft 1. Each of the support members 28 has a shaft portion 29, a head section 30 formed at the base end section (the upper end section in FIG. 4) of the shaft portion 29, and a male screw section 31 formed on the outer peripheral surface of the head section 30. The support member 28 is arranged such that the tip end section of the shaft portion 29 is inserted into the circular hole 27, the middle section of the shaft portion 29 is passed through the through-hole 24 of the flat plate section 22 inserted inside the guide hole 25 without looseness and to be relatively displaced in the axial direction of the support member 28, and the male screw section 31 is screwed into the screw hole 26. Due to this, the support members 28 support the two-stage gears 3a so as to be displaced in the radial direction of the steering shaft 1.

In this example, elastic members 33 are held between the seating surfaces 32 of the head sections 30 of the support members 28 and the flat surfaces of the flat plate sections 22 of the two-stage gear 3a facing the seating surfaces 32, and the elasticity of the elastic members 33 elastically biases the two-stage gear 3a inward in the radial direction of the steering shaft 1. Due to this, the first teeth section 10 is elastically biased toward the shaft side teeth section 4, and the second teeth section 11 is elastically biased toward the motor side teeth section 8. That is, in this example, the pressing mechanism 17 is configured by the elastic members 33. The elastic members 33 are made of, for example, torsion coil springs and rubber having a cylindrical shape.

Both end sections in the axial direction of the intermediate shaft 9 of two two-stage gears 3b of the two-stage gears 3a, 3b that are not biased by the pressing mechanism 17 are supported and fastened inside the housing 13. Specifically, in this example, rectangular holes are formed in portions of the rear side surface of the front side housing element 14 and the rear side housing element 15 which are aligned with each other, and the flat plate sections 22 of each of the two-stage gears 3b are inserted or press fitted into the rectangular holes without looseness.

The reaction force applying device for the steering wheel of this example drives and rotates the output shaft 7 of the electric motor 2 when the steering wheel is operated by the operator. The rotational torque of the output shaft 7 is increased by the deceleration mechanism 12 and transmitted to the steering shaft 1, and an operation reaction force is applied to the steering wheel via the steering shaft 1. Note that the magnitude of the operation reaction force applied to the steering wheel is determined according to the steering angle of the steering wheel, the torque transmitted by the steering shaft 1, and the like acquired by the sensor.

In the reaction force applying device for the steering wheel of this example, the steering shaft 1 and the output shaft 7 of the electric motor 2 which is the source of the operation reaction force applied to the steering wheel are coaxially arranged. Therefore, the reaction force applying device for the steering wheel of this example can be configured to be compact as a whole when compared with the structure disclosed in JP 2009-073334 (A) in which a pair of electric motors are arranged around the steering shaft.

In this example, the motive power of the electric motor 2 is decelerated by the deceleration mechanism 12 configured by the motor side teeth section 8, the two-stage gears 3a, 3b, and the shaft side teeth section 4, and then it is applied to the steering shaft 1. Therefore, in the reaction force applying device for the steering wheel of this example, the electric motor can be configured to be compact and a general-purpose product can be used as the electric motor 2 when compared with the direct drive structure disclosed in JP 2007-055453 (A) in which the motive power of the electric motor is directly applied to the steering shaft.

The reaction force applying device for the steering wheel of this example comprises three two-stage gears 3a, 3b that transmit the motive power between the motor side teeth section 8 of the output shaft 7 of the electric motor 2 and the shaft side teeth section 4 of the steering shaft 1. That is, the motive power of the electric motor 2 can be distributed to the three two-stage gears 3a, 3b and transmitted to the steering shaft 1. Therefore, the torque transmitted by each of the two-stage gears 3a, 3b can be suppressed to be small as compared with the structure comprising only one two-stage gear, and the dimension of the outer diameter of the two-stage gears 3a, 3b can be kept small by that amount (the teeth sections of the two-stage gears 3a, 3b can be made small). Accordingly, the deceleration mechanism 12 that decelerates the motive power of the electric motor 2 and transmits it to the steering shaft 1 can be configured to be compact when compared with the structure provided with only one two-stage gear.

Further, in this example, one two-stage gear 3a of the two-stage gears 3a, 3b is elastically biased toward inside in the radial direction of the steering shaft 1 by the pressing mechanism 17. Due to this, backlash in the area of engagement between the first teeth section 10 of the two-stage gear 3a and the shaft side teeth section 4 of the steering shaft 1, and in the area of engagement between the second teeth section 11 of the two-stage gear 3a and the motor side teeth section 8 of the electric motor 2 is suppressed. Therefore, it is possible to prevent occurrence of chattering in the area of engagement when the steering shaft 1 is started to rotate or the direction of rotation of the steering shaft 1 is changed.

Note that, in this example, when the one two-stage gear 3a is biased by the pressing mechanism 17, the steering shaft 1 and the output shaft 7 of the electric motor 2 are biased by this two-stage gear 3a toward the middle section in the circumferential direction of the two two-stage gears 3b that are not biased by the pressing mechanism 17. Due to this, it is possible to suppress backlash also in the area of engagement between the first teeth sections 10 of the two-stage gears 3b and the shaft side teeth section 4 of the steering shaft 1, and in the area of engagement of the second teeth sections 11 of the two-stage gears 3b and the motor side teeth section 8 of the electric motor 2.

Note that, although the reaction force applying device for the steering wheel of this example comprises three two-stage gears 3a, 3b, the reaction force applying device of the present invention may be configured to comprise only one two-stage gear depending on the magnitude of the motive power transmitted between the electric motor and the steering shaft. Alternatively, the reaction force applying device of the present invention may be configured to comprise two or more than four two-stage gears.

Also, in the reaction force applying device for the steering wheel of this example, only one two-stage gear 3a of three two-stage gears 3a, 3b comprises a pressing mechanism 17 which elastically biases the one two-stage gear 3a toward inside in the radial direction of the steering shaft 1. From the viewpoint of preventing occurrence of chattering in the area of engagement when starting to rotate the steering shaft 1 or changing the direction of rotation of the steering shaft 1, as in this example, it is sufficient to provide the pressing mechanism 17 only for one two-stage gear 3a. However, when a plurality of two-stage gears are provided, it is possible to provide a pressing mechanism for more than two or all of the two-stage gears that elastically biases the two-stage gears toward inside in the radial direction of the steering shaft.

### [Second Example]

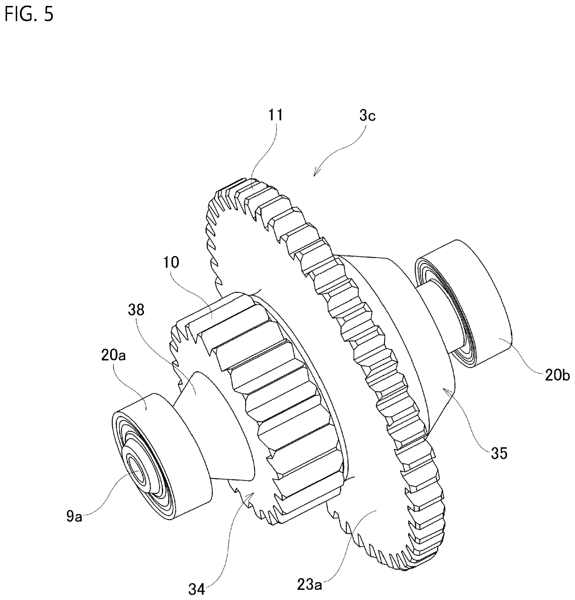

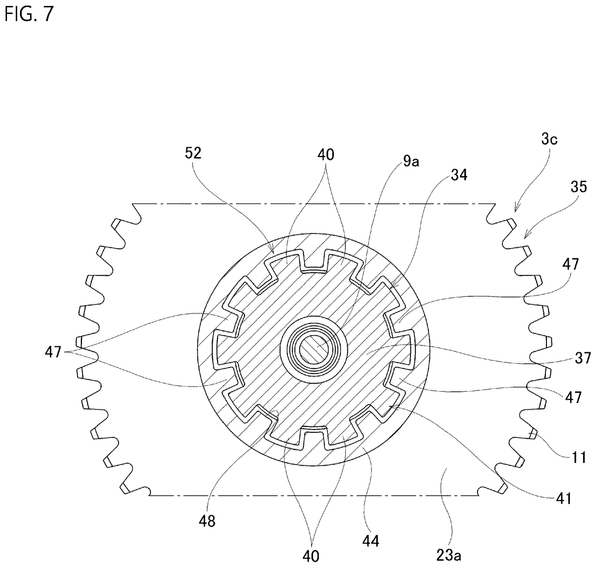

FIG. 5 to FIG. 7 illustrate a second example of an embodiment of the present invention. In this example, the structure that suppresses backlash existing in the area of engagement and prevents occurrence of chattering when the steering shaft 1 starts to rotate or the direction of rotation of the steering shaft 1 (see FIG. 1) is changed is different from the reaction force applying device for the steering wheel according to the first example.

Of a plurality of two-stage gears 3c, a two-stage gear 3c, which has a structure for preventing occurrence of chattering, is configured by connecting the first member 34 and the second member 35 so as to relatively rotate with an intermediate shaft 9a which is a torsion bar.

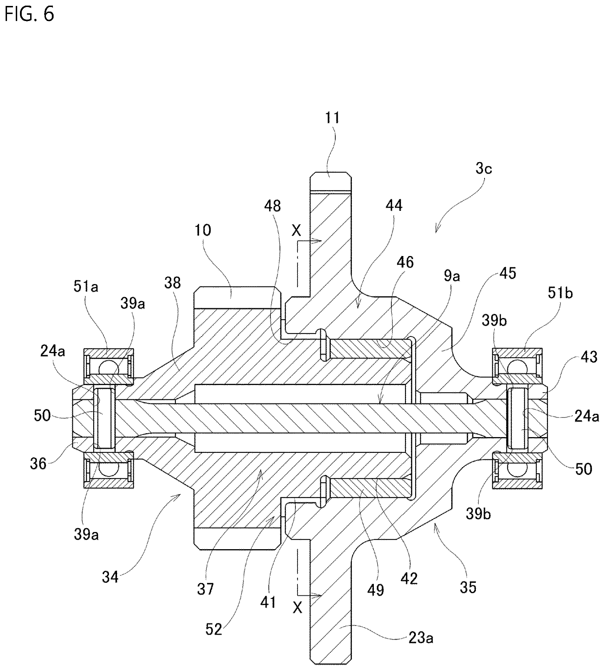

The first member 34 has a stepped cylindrical shape, and is configured by connecting the first small diameter cylindrical section 36 on the steering shaft 1 side (rear side; left side in FIGs. 5 and 6) and the first large diameter cylindrical section 37 on the electric motor 2 side (front side; right side in FIGs. 5 and 6) with the conical cylindrical section 38 having a dimension of the outer diameter that becomes smaller toward the steering shaft 1 side.

The first small diameter cylindrical section 36 has circular holes 39a coaxial with each other at two positions on opposite sides in the radial direction.

The first large diameter cylindrical section 37 has the first teeth section 10 that engages with the shaft side teeth section 4 of the steering shaft 1 on the outer peripheral surface of the rear side portion, and has a male stopper section 41 formed by uniformly spacing the inner diameter-side convex sections 40 in the circumferential direction that protrude outward in the radial direction on the outer peripheral surface of the middle section. Further, the first large diameter cylindrical section 37 comprises an inner diameter-side cylindrical surface section 42 having a dimension of the outer diameter that does not change in the axial direction. The inner diameter-side cylindrical surface section 42 has an outer diameter that is smaller than the tooth bottom circle diameter of the male stopper section 41, and the male stopper section 41 has a tooth tip circle diameter that is smaller than the tooth bottom circle diameter of the first teeth section 10. Further, the first large diameter cylindrical section 37 has a single cylindrical inner peripheral surface whose inner diameter does not change in the axial direction except for the front-end section.

The second member 35 is configured by connecting the second small diameter cylindrical section 43 on the electric motor 2 side and the second large diameter cylindrical section 44 on the steering shaft 1 side with the side plate section 45 having a substantially circular ring shape.

The second small diameter cylindrical section 43 has circular holes 39b coaxial with each other at two positions on opposite sides in the radial direction.

The second large diameter cylindrical section 44 has a flange portion 23a protruding outward in the radial direction in the middle section in the axial direction, and has a second teeth section 11 that engages with the motor side teeth section 8 of the electric motor 2 on the outer peripheral surface of the flange portion 23a. Further, the second large diameter cylindrical section 44 has an outer diameter-side cylindrical surface section 46 having a dimension of the inner diameter that does not change in the axial direction on the inner peripheral surface of the front side portion, and has a female stopper section 48 formed by uniformly spacing the outer diameter-side convex sections 47 in the circumferential direction that protrude inward in the radial direction on the inner peripheral surface of the rear side portion. The outer diameter-side cylindrical surface section 46 has an inner diameter that is smaller than the tooth tip circle diameter of the female stopper section 48.

The intermediate shaft 9a is a torsion bar that is easily twisted and deformed, and has through-holes 24a that pass through in the radial direction at both end sections in the axial direction.

The first member 34 and the second member 35 are combined by fitting the outer diameter-side cylindrical surface section 46 onto the inner diameter-side cylindrical surface section 42 so as to be able to relatively rotate via a collar 49 having a cylindrical shape, and by arranging the inner diameter-side convex sections 40 of the male stopper section 41 and the outer diameter-side convex sections 47 of the female stopper section 48 alternately so as to allow a slight relative displacement in the circumferential direction. Note that the collar 49 is made of a material having a small sliding resistance with respect to the inner diameter-side cylindrical surface section 42 and the outer diameter-side cylindrical surface section 46. Alternatively, instead of the collar 49, it is also possible to provide radial a needle bearing between the inner diameter-side cylindrical surface section 42 and the outer diameter-side cylindrical surface section 46. Further, in a state where the first member 34 and the second member 35 are combined, a gap exists between the side surfaces in the circumferential direction of the inner diameter-side convex sections 40 of the male stopper section 41 and the side surfaces in the circumferential direction of the outer diameter-side convex sections 47 of the female stopper section 48.

The both end sections in the axial direction of the intermediate shaft 9a are inserted into the inner diameter side of the first small diameter cylindrical section of the first member 34 and the inner diameter side of the second small diameter cylindrical section 43 of the second member 35, and joint pins 50 are inserted or press-fitted so as to span the through-holes 24a and the circular holes 39a, 39b. Due to this, the first member 34 and the second member 35 are joined so as to allow some relative rotation.

In the two-stage gear 3c, when the two-stage gear 3c is not transmitting torque, the intermediate shaft 9a exhibits elasticity in the twisting direction. In other words, in a state where the two-stage gear 3c is not transmitting torque, elasticity in the twisting direction is applied to the intermediate shaft 9a. Specifically, in this example, the two-stage gear 3c is arranged such that the first teeth section 10 is engaged with the shaft side teeth section 4 and the second teeth section 11 is engaged with the motor side teeth section 8 in a state where the intermediate shaft 9c, which is a torsion bar, is elastically deformed in the twisting direction.

Therefore, the teeth surfaces of the shaft side teeth section 4 and the teeth surfaces of the first teeth section 10 elastically come in contact, and the teeth surfaces of the motor side teeth section 8 and the teeth surfaces of the second teeth section 11 elastically come in contact. Due to this, it is possible to suppress backlash in the area of engagement.

Further, in this example, the male stopper section 41 of the first member 34 and the female stopper section 48 of the second member 35 are engaged via a gap in the circumferential direction so as to prevent the first member 34 and the second member 35 from excessively rotating relative to each other. That is, in this example, the engaging portion between the male stopper section 41 and the female stopper section 48 configure a stopper mechanism 52 that prevents the first teeth section 10 and the second teeth section 11 from rotating relative to each other by a predetermined angle or more. Due to such a stopper mechanism 52, the intermediate shaft 9a, which is a torsion bar, is prevented from being excessively deformed in the twisting direction.

Note that stopper mechanism 52 can be configured by a structure other than the structure in which the male stopper section 41 and the female stopper section 48 are engaged with each other like in this example. For example, the stopper mechanism can be configured by a structure in which the first member and the second member are prevented from excessively rotating relative to each other due to the engagement between the first convex sections arranged at two positions separated from each other in the circumferential direction of the front end surface of the first member and the second convex sections arranged between the first convex sections in the circumferential direction of the rear end surface of the second member. The stopper mechanism 52 can also be configured by other applicable known structures. The configuration and operational effects of the other parts are the same as those of the first example.

### [Third Example]

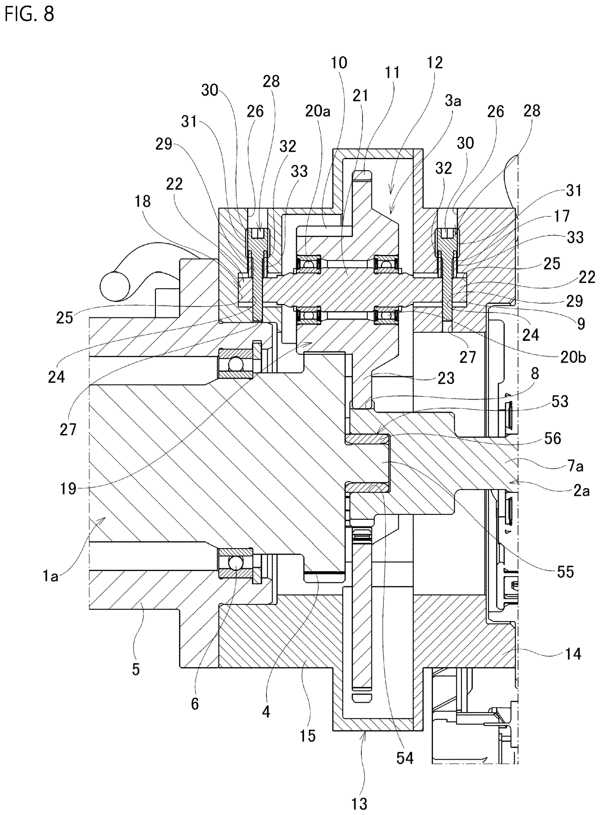

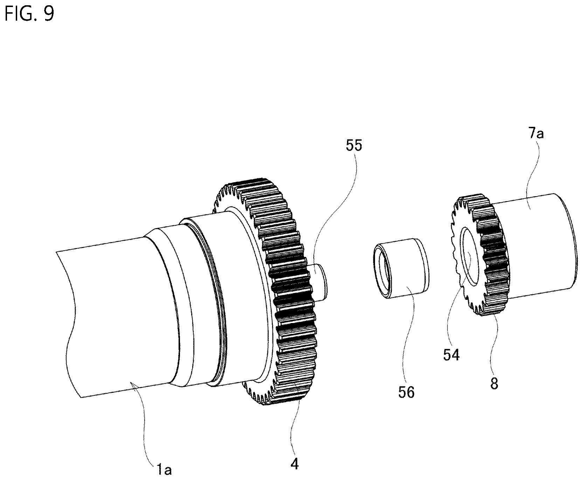

FIG. 8 to FIG. 9 illustrate a third example of an embodiment of the present invention. The reaction force applying device for the steering wheel of this example comprises an axis alignment portion 53 for aligning the steering shaft 1a and the output shaft 7a of the electric motor 2a so as to be coaxially arranged. The axis alignment portion 53 of this example comprises a concave section 54, a convex section 55, and a sleeve 56.

The concave section 54 is provided on the tip end surface of the output shaft 7a so as to be recessed in the direction away from the steering shaft 1a in the axial direction. The convex section 55 is provided at the tip end section of the steering shaft 1a, and it is arranged coaxially with the concave section 54 on the inner diameter side of the concave section 54. The sleeve 56 is made of a material having a small friction coefficient with respect to a material constituting the steering shaft 1a and the output shaft 7a, such as an oil-impregnated metal. The sleeve 56 is arranged between the inner peripheral surface of the concave section 54 and the outer peripheral surface of the convex section 55 without looseness in the radial direction, and is arranged so as to freely rotate relative to at least one of the steering shaft 1a and the output shaft 7a.

The reaction force applying device for the steering wheel of this example comprises the axis alignment portion 53. Therefore, as in this example, even in a structure where the steering shaft 1a is supported by the rear side housing element 15 via the steering column 5 and the rolling bearing 6, and the output shaft 7a of the electric motor 2a is supported by the front side housing element 14, the coaxiality between the steering shaft 1a and the output shaft 7a can be sufficiently ensured. The configuration and operational effects of the other parts are the same as those of the first and second examples.

### [Fourth Example]

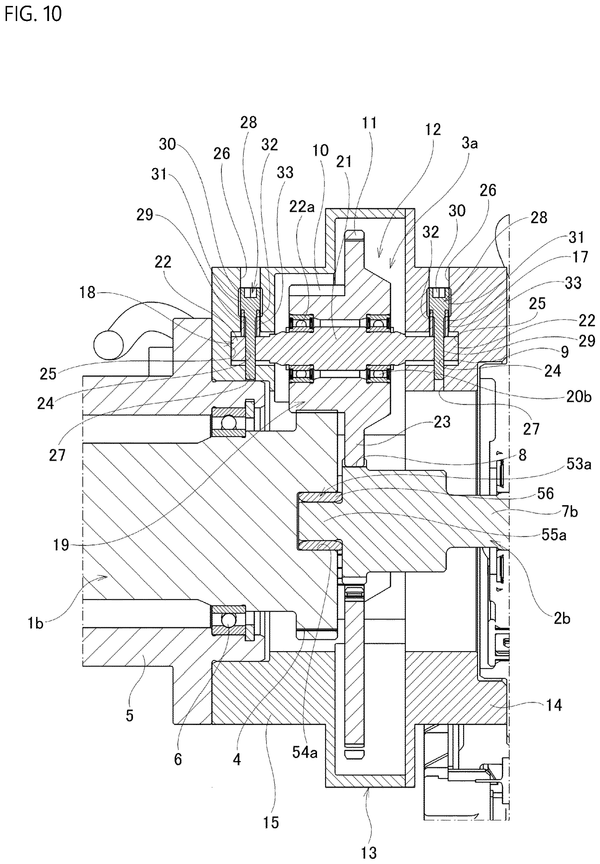

FIG. 10 illustrates a fourth example of an embodiment of the present invention. The axis alignment portion 53a of the reaction force applying device for the steering wheel of this example comprises a concave section 54a provided on the tip end surface of the steering shaft 1b, a convex section 55a provided at the tip end section of the output shaft 7b of the electric motor 2b, and a sleeve 56 arranged between the inner peripheral surface of the concave section 54a and the outer peripheral surface of the convex section 55b. The configuration and operational effects of the other parts are the same as those of the first through third examples.

### [Fifth Example]

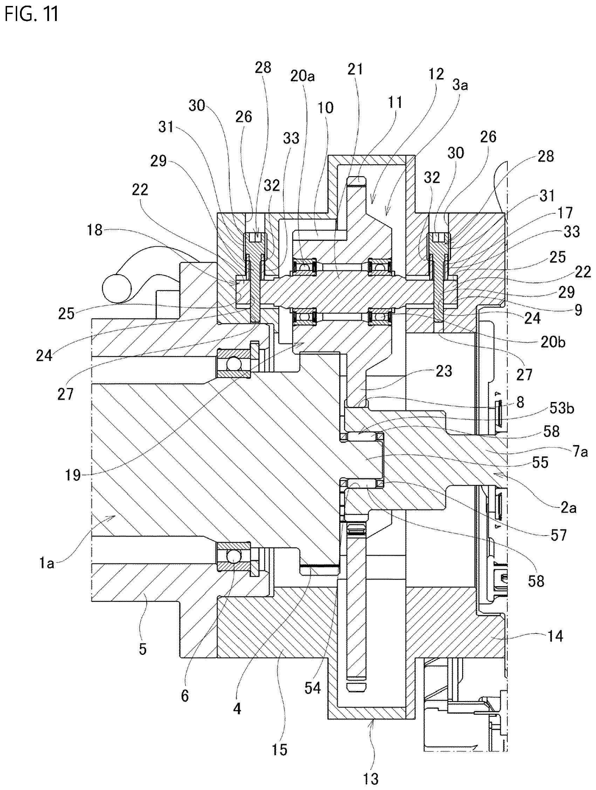

FIG. 11 illustrates a fifth example of an embodiment of the present invention. The axis alignment portion 53b of the reaction force applying device for the steering wheel of this example is configured by arranging a plurality of rolling elements 58 held by a cage 57 between the inner peripheral surface of the concave section 54 provide on the tip end surface of the output shaft 7a of the an electric motor 2a and the outer peripheral surface of the convex section 55 provided at the tip end section of the steering shaft 1a so as to bee able to roll freely. In other words, the axis alignment portion 53b of this example is configured by arranging a radial needle bearing composed of a cage 57 and a plurality of rolling elements 58, instead of the sleeve 56 of the axis alignment portion 53 of the third example, between the inner peripheral surface of the concave section 54 of the output shaft 7a and the outer peripheral surface of the convex sections 55 of the steering shaft 1a.

With the reaction force applying device for the steering wheel of this example, when compared with the reaction force applying device for the steering wheel of the third example as described previously, it is possible to make the resistance small when the steering shaft 1a and the output shaft 7a rotate relative to each other. Note that needles are used as the rolling elements 58 in this example, however, it is also possible to use balls or rollers. Further, it is also possible to configure an axis alignment portion by arranging a plurality of rolling elements held by a cage between the inner peripheral surface of the concave section provided on the tip end surface of the steering shaft and the outer peripheral surface of the convex section provided at the tip end section of the output shaft of the electric motor so as to roll freely. The configuration and operational effects of the other parts are the same as those of the first and third examples.

### [Sixth Example]

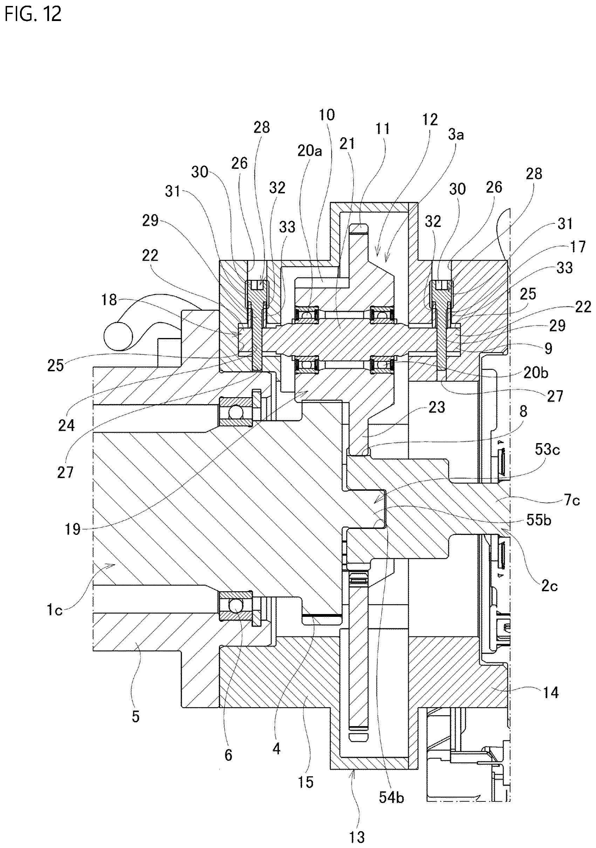

FIG. 12 illustrates a sixth example of an embodiment of the present invention. The axis alignment portion 53c of the reaction force applying device for the steering wheel of this example is configured by fitting the concave section 54b provided on the tip end surface of the output shaft 7c of the electric motor 2c and the convex section 55b provided at the tip end section of the steering shaft 1c without looseness in the radial direction so as to be able to rotate relative to each other. In other words, the axis alignment portion 53c of this example is configured by in-row fitting the concave section 54b of the output shaft 7c and the convex section 55b of the steering shaft 1c.

With the reaction force applying device for the steering wheel of this example, when compared with the reaction force applying device for the steering wheel of the third example as described previously, it is possible to reduce the number of parts. Note that it is also possible to configure the axis alignment portion by fitting the concave section provided on the tip end surface of the steering shaft and the convex section provided at the tip end section of the output shaft without looseness in the radial direction so as to rotate relative to each other. The configuration and operational effects of the other parts are the same as those of the first and third examples.

Note that the first to sixth examples of an embodiment of the present invention described above can be appropriately combined and implemented as long as no contradiction occurs. Specifically, for example, it is possible to implement a structure where the first and second examples are combined, and it is also possible to apply the structure of the fifth example or the sixth example to the third example or the fourth example.

### [Explanation of Reference Numbers]

- 1, 1a, 1b, 1c: Steering shaft
- 2, 2a, 2b, 2c: Electric motor
- 3a, 3b, 3c: Two-stage gears
- 4: Shaft side teeth section
- 5: Steering column
- 6: Rolling bearing
- 7, 7a, 7b, 7c: Output shaft
- 8: Motor side teeth section
- 9: Intermediate shaft
- 10: First teeth section
- 11: Second teeth section
- 12: Deceleration mechanism
- 13: Housing
- 14: Front side housing element
- 15: Rear side housing element
- 16: Bolt
- 17: Pressing mechanism
- 18: Shaft member
- 19: Cylindrical member
- 20a, 20b: Rolling bearing
- 21: Large diameter section
- 22: Flat plate sections
- 23, 23a: Flange portion
- 24, 24a: Through-hole
- 25: Guide hole
- 26: Screw hole
- 27: Circular hole
- 28: Support member
- 29: Shaft portion
- 30: Head section
- 31: Male screw section
- 32: Seating surface
- 33: Elastic member
- 34: First member
- 35: Second member
- 36: First small diameter cylindrical section
- 37: First large diameter cylindrical section
- 38: Conical cylindrical section
- 39a, 39b: Circular holes
- 40: Inner diameter-side convex sections
- 41: Male stopper section
- 42: Inner diameter-side cylindrical surface section
- 43: Second small diameter cylindrical section
- 44: Second large diameter cylindrical section
- 45: Side plate section
- 46: Outer diameter-side cylindrical surface section
- 47: Outer diameter-side convex section
- 48: Female stopper section
- 49: Collar
- 50: Joint pin
- 51a,: 51b Rolling bearing
- 52: Stopper mechanism
- 53, 53a, 53b, 53c: Axis alignment portion
- 54, 54a, 54b: Concave section
- 55, 55a, 55b: Convex section
- 56: Sleeve
- 57: Cage
- 58: Rolling element

## Claims

1. A reaction force applying device for a steering wheel, comprising:
a steering shaft having a shaft side teeth section,
an electric motor having an output shaft coaxially arranged with the steering shaft and a motor side teeth section arranged at a tip end section of the output shaft,
at least one two-stage gear having an intermediate shaft arranged parallel to the steering shaft, a first teeth section arranged on the intermediate shaft and engaging with the shaft side teeth section, and a second teeth section arranged on the intermediate shaft on a side of the electric motor with respect to the first teeth section and engaging with the motor side teeth section.

2. The reaction force applying device for the steering wheel according to claim 1, wherein the at least one two-stage gear is configured by a plurality of two-stage gears.

3. The reaction force applying device for the steering wheel according to claim 1 or 2, wherein a pressing mechanism biasing the at least one two-stage gear toward inside in a radial direction of the steering shaft is provided.

4. The reaction force applying device for the steering wheel according to any one of claims 1 to 3, wherein the intermediate shaft is a torsion bar, and the intermediate shaft exhibits elasticity in a twisting direction in a state where the at least one two-stage gear is not transmitting torque.

5. The reaction force applying device for the steering wheel according to claim 4, wherein the at least one two-stage gear comprises a stopper mechanism for preventing the first teeth section and the second teeth section from rotating relative to each other by a predetermined angle or more.

6. The reaction force applying device for the steering wheel according to any one of claims 1 to 5, an axis alignment portion aligning the steering shaft ad the output saft is provided.

7. The reaction force applying device for the steering wheel according to claim 6, wherein the axis alignment portion comprises a concave section provided in one of the steering shaft and the output shaft, a convex section arranged in the other of the steering shaft and the output shaft and arranged on an inner diameter side of the concave section, and a sleeve arranged between an inner peripheral surface of the concave section and an outer peripheral surface of the convex section without looseness in a radial direction.

8. The reaction force applying device for the steering wheel according to claim 6, wherein the axis alignment portion comprises a concave section provided in one of the steering shaft and the output shaft, a convex section arranged in the other of the steering shaft and the output shaft and arranged on an inner diameter side of the concave section, and a plurality of rolling elements between the inner peripheral surface of the concave section and the outer peripheral surface of the convex section so as to be able to roll freely.

9. The reaction force applying device for the steering wheel according to claim 6, wherein the axis alignment portion comprises a concave section provided in one of the steering shaft and the output shaft, and a convex section arranged in the other of the steering shaft and fitted inside the concave section without looseness in a radial direction so as to be able to rotate relative to each other.
